# EUROPEAN PATENT SPECIFICATION

(11) **EP 3 930 891 B1**
(45) Date of publication and mention of the grant of the patent: **11.09.2024**
(21) Application number: 20712687.1
(22) Date of filing: 25.02.2020
(51) Int. Cl.: B01J 20/02, B01J 20/28, B01J 20/30, B01J 20/32, B01J 21/02, B01J 23/06, C04B 41/51, C01G 9/02

(54) **SYNTHESIS METHOD OF ZINC OXIDES NANOCRYSTALS COATED WITH SILICA AND DECORATED WITH SILVER NANOPARTICLES**
VERFAHREN ZUR SYNTHESE VON MIT SILICIUMDIOXID BESCHICHTETEN UND MIT SILBERNANOPARTIKELN DEKORIERTEN ZINKOXIDNANOKRISTALLEN
PROCÉDÉ DE SYNTHÈSE DE NANOCRISTAUX D'OXYDES DE ZINC ENROBÉS DE SILICE ET DÉCORÉS PAR DES NANOPARTICULES D'ARGENT

(30) Priority: 26.02.2019 IT 201900002743
(43) Date of publication of application: 05.01.2022
(73) Proprietor: Typeone Biomaterials S.r.l., 73036 Muro Leccese (LE) (IT)
(72) Inventor: SALVATORE, Luca, 73036 Muro Leccese (LE) (IT); BETTINI, Simona, 73036 Muro Leccese (LE) (IT)
(74) Representative: Conversano, Gabriele
(86) International application number: PCT/IB2020/051584
(87) International publication number: WO 2020/174381

(56) References cited:
- CHEN CHENG ET AL: "Preparation and characterization of ZnO/SiO2/Ag nanoparticles as highly sensitive substrates for surface-enhanced Raman scattering", MATERIALS LETTERS, vol. 165, 17 November 2015 (2015-11-17), pages 55 - 58, XP029364159, ISSN: 0167-577X, DOI: 10.1016/J.MATLET.2015.11.075
- ROSANNA PAGANO ET AL: "Enhanced Solar-Driven Applications of ZnO@Ag Patchy Nanoparticles", JOURNAL OF PHYSICAL CHEMISTRY C, vol. 121, no. 48, 27 November 2017 (2017-11-27), US, pages 27199 - 27206, XP055635635, ISSN: 1932-7447, DOI: 10.1021/acs.jpcc.7b09594
- KOKATE MANGESH ET AL: "Zinc-oxide-silica-silver nanocomposite: Unique one-pot synthesis and enhanced catalytic and anti-bacterial performance", JOURNAL OF COLLOID AND INTERFACE SCIENCE, ACADEMIC PRESS,INC, US, vol. 483, 18 August 2016 (2016-08-18), pages 249 - 260, XP029716755, ISSN: 0021-9797, DOI: 10.1016/J.JCIS.2016.08.039

## Description

### Technical field

The present invention relates to nanostructures comprising a zinc oxide seed (ZnO), with hexagonal crystalline form (i.e. wurtzite), surface-coated with silver nanoparticles (NPs), with interposition of a nanometric silicon dioxide layer between ZnO seed and AG nanoparticles, thus obtaining the ZnO@SiO₂@Ag complex.

The invention provides also synthesis methods for the production of ZnO nanostructures with silver coating, with nanometric SiO₂ layer interposition. State of the art

At the state of the art, there are known zinc oxide nanostructures (ZnO) in the form of crystalline wurtzite, which can be synthetized in various shapes and dimensions through chemical or metallurgical processes.

The metallurgical processes typically used for ZnO synthesis in the wurtzite crystalline form guarantee optimal yields both from the qualitative and quantitative point of view, but they require sophisticated equipment and the relative costs are very high. The chemical processes are based on mechanical-chemical, sol-gel, hydro- or solvothermal synthesis, pyrolysis, sonochemical processes or on controlled precipitation.

Among these ones, the controlled chemical precipitation is among the simpler and more economical ones and allows to produce crystalline ZnO apt for applications in biological and bio-technological field (as anti-bacterial agent and natural photosensitizer), as well as in nanotechnologies field for the production of piezoelectric nanogenerators.

The process comprises two steps: the first one providing the reduction of a solution of a zinc salt (i.e. zinc sulfate, ZnSO₄) by means of a reducer (typically sodium hydroxide, NaOH), thus obtaining a zinc oxide "precursor". In the second step, the precursor is subjected to a thermal treatment with the double function of converting the precursor (i.e. Zn(OH)₂) in ZnO and of avoiding the formation of intermediate compounds which can nullify the purity, and generally the chemical-physical properties of the material, thus making it not suitable to be used in biological and bio-technological field.

The above described two steps process is regulated by various parameters of synthesis, and in particular:
- in the step 1: by the addition speed of reagents, by the concentration of reagents, by the reaction temperature or the precipitation time,
- in the step 2: by the temperature and thermal treatment duration.

Each of these parameters influences the material final properties significatively, both in terms of crystallinity and purity, but also in terms of particles dimensions. The adjustment of such parameters allows to control the synthesis process very carefully and to obtain, as a function the chosen set-up, a material with determined chemical-physical properties and in particular a determined crystallinity and purity grade.

It is also known that the composition of the metal salt and/or the usage of possible additives can modify the shape and dimension of ZnO particles. More in detail, the effect of the additives used is very much different according to their chemical nature. For example, the inorganic additives are incorporated in the crystal lattice during the precipitations and this can cause disorder in the lattice (i.e. this can induce a low crystallinity and purity grade), while the organic compounds can be adsorbed on the crystalline face and can modify the growth rate (i.e. the particles dimensions).

In the document "Microwave-assisted synthesis, photocatalysis and antibacterial activity of Ag nanoparticles supported on ZnOs flowers" (Phuruangrat et al., Journal of Physics and Chemistry of Solids 126 (2019) 170-177), heterogenous ZnO/Ag structures are described in which the zinc oxide, in wurtzite crystalline form, appears in clusters of many hundreds nanorods with a flower shape, the single nanorods being dimensioned about 100 nm and having a length equal to 2-3 µm. On these structures, Ag cubic nanoparticles are provided, with average dimension lower than 50 nm, and silver lower than 10% by weight.

In the document "Enhancement of photocatalytic hydrogen production of semiconductor by plasmonic silver nanocubes under visible light" (Chen et al., Material Letters 242 (2019) 47-50) there are described structures in which Ag nanocubes with dimensions equal to about 50 nm are distributed on nanostructures comprising a series of elements and compounds, among which zinc oxide. Ag is about 3% by weight.

"Fabrication of silver nanoparticles decorated zinc oxide nanotubes by electrodeposition technique for photoelectrochemical water splitting" (Rasouli et al., Material Science in Semiconductor Processing 93 (2019) 371-378) describes ZnO nanotubes in the wurtzite crystalline form on which Ag nanoparticles are provided, with diameter about 30 nm, the ones next the other ones in order to cover completely the nanotube

"Preparation and characterization of ZnO/SiO2/Ag nanoparticles as highly sensitive substrates for surface-enhanced Raman scattering" (Chen et. al, Material Letters, 165 (2016) 55-58) discloses a simple large-scale approach to prepare ZnO/SiO₂/Ag nanoparticles.

### Technical problem

At the state of the art there are not known efficient and economical synthesis methods for the production of such nanostructures.

### Aim of the invention

Therefore, the present invention provides nanostructures as defined in claim 4, comprising a ZnO seed in its hexagonal crystalline form (or wurtzite) partially coated with silver in the form of nanoparticles, with a nanometric silicon dioxide layer interposed between the ZnO seed and the Ag nanoparticles coating (thus obtaining the ZnO@SiO₂@Ag complex). Yet, the present invention provides synthesis methods as defined in claim 1 for the production of the just cited nanostructures.

Also disclosed is a method for the production of singlet oxygen ¹O₂ by means of the activation of the above described nanostructures by means of visible light.

The invention is applied in the pharmaceutical, bioengineering, bio-technological and advanced medical therapies fields. ZnO nanostructures functionalized with Ag·NPs (i.e. ZnO@Ag adducts which are however not according to the invention) are in fact characterized by excellent antibacterial, anti-inflammatory and anti-tumoral properties and can be conveniently and efficiently incorporated in protein-based (e.g. collagen), polysaccharide-based (e.g. hyaluronic acid) and/or inorganic-based (e.g. hydroxyapatite) preparations, of natural and/or synthetic origin, for the production of bioactive and "smart" materials and devices to be used in the above cited fields.

### Brief description of the invention

The present invention reaches the prefixed aims since it is a nanostructure comprising a zinc oxide seed (ZnO), in the wurtzite hexagonal crystalline form, surface-coated with silver nanoparticles (Ag), said silver nanoparticles being spaced to each other. The ZnO seed is in nanoflakes form, and it has characteristic dimensions of few hundreds of nanometers in length and few nanometers in thickness; according to the invention also said nanostructure comprises a nanometric silicon dioxide layer interposed between said zinc oxide seed and said silver nanoparticles coating.

Also disclosed is a synthesis method of nanostructures comprising a ZnO seed coated with silver nanoparticles, comprising the steps of:
A. reduction of a solution of a zinc salt by means of a reducer, thus obtaining a zinc oxide precursor and precipitation of said precursor in the solution;
B. thermal treatment of said precursor at ambient pressure and temperature between 100 and 120°C, thus obtaining ZnO seeds;
C. addition of silver nitrate (AgNOs) and ammonium hydroxide (NH₄·OH) to said ZnO nanoparticles, under constant stirring at ambient pressure and temperature, thus obtaining [Ag(NH₃)₂]+ which, being positively charged, binds to the surface of said ZnO seeds;
D. reduction of [Ag(NH₃)₂]+ by means of the addition of a reducer for the silver nanoparticles thus obtaining crystalline ZnO nanostructures surface-coated with silver nanoparticles.

### Detailed description of the invention

As yet said, the invention provides nanostructures comprising a zinc oxide seed, in the hexagonal crystalline form (i.e. wurtzite)

The wurtzite crystalline form is needed to guarantee that the ZnO intrinsic chemical-physical properties are preserved. In fact, to it the capacity of absorbing light is associated, the basic property of the applications of the nanostructures of interest. Moreover, thanks to the particular crystalline structure of the basic material (i.e. ZnO), as well as the peculiar architecture of the adduct/complex obtained, these structures show also particularly relevant pyroelectric and piezoelectric properties.

The ZnO nanostructures have the shape of nanoflakes with dimensions about 200 nm and a thickness between 5 and 15 nm and preferably equal to about 10 nm.

The nanoflakes form has allowed to optimize the anisotropic cover with Ag nanoparticles of the ZnO surface, which is a fundamental requirement for the desired technical effect.

According to the invention,
Ag NPs deposited on the surface have a substantially spherical shape, and an average dimension between 15 and 20 nm. They are adhered to the surface of the ZnO nanostructure and spaced to each other. According to the invention, between the single silver nanoparticles it is provided a distance about 30-40 nm. The spacing is a pre-requirement fundamental for the applications of the invention. The aggregation of many Ag NPs is absolutely to be avoided to allow the plasmonic excitation and so, again to maximize the light absorbance and to exploit the electronic communication between ZnO and Ag at best.

### Effects of the coating

The surface coating of Ag nanoparticles has the function to improve a series of wurtzite intrinsic optical properties, thus making it an efficient antibacterial and anti-inflammatory agent, as well as a powerful photosensitizer for the production of oxygen free radicals, *in primis* the singlet oxygen, with a very greater efficiency than the ZnO as it is.

The nanostructures comprising ZnO seeds decorated with Ag·NPs, are characterized by excellent antibacterial, anti-inflammatory and anti-tumoral properties and can be conveniently and efficiently incorporated in protein-based (e.g. collagen), polysaccharide-based (e.g. hyaluronic acid) and/or inorganic-based (e.g. hydroxyapatite) preparations, of natural and/or synthetic origin, for the production of bioactive and "smart" materials and devices to be used in the pharmaceutical, biomedical and bio-technological fields.

The basic idea is to realize a ZnO-Ag interface or junction in order to exploit the photo-induced charge transfer from the semiconductor conduction band (i.e. ZnO) to the Fermi level of the metal (i.e. Ag).

Such charge passage induces a delay in the recombination of the (h⁺)/electron defect couple, with defects stabilization in valence band of ZnO and electrons photo-excited at Ag level. Such electrons reduce atmospheric O₂ to O₂¹⁻ which is in turn oxidized to ¹O₂ (singlet oxygen) by the defects stabilized at ZnO level. As it is well known, the singlet oxygen has a very important role in the photo-dynamic therapy of the cancer and other diseases. In fact, the oxygen free radicals, such as the singlet oxygen, can induce the death of pathological cells, since they are very powerful oxidant species.

The analyzed electronic transfer allows to improve remarkably a series of ZnO intrinsic properties in its wurtzite crystalline form, which, so modified, results a powerful antibacterial, anti-inflammatory and photosensitizer agent for the production of oxygen free radicals, *in primis* the singlet oxygen. The specific characteristic of Ag coating according to the invention, and in particular the spacing between nanoparticles, allow to optimize the photoexcitation effect, since the aggregation of Ag nanoparticles would alter the electronic communication between the semiconductor and the same Ag. The geometry obtained is in fact another fundamental requirement for the application of the invention.

### ZnO@SiO₂@Ag nanostructures

According to the invention, the ZnO@Ag nanostructures contain further a nanometric silicon dioxide layer interposed between the zinc oxide seed and the silver nanoparticles coating, thus obtaining the ZnO@SiO₂@Ag complex. According to the invention, the nanometric layer is about 10 nm thick.

The introduction of an insulating silicon dioxide layer (SiO₂) between ZnO seed and Ag NPs allows to exploit the localized Surface Plasmonic Resonance phenomenon. In this way, in fact, the visible light can excite the surface plasmon associated with Ag nanoparticles, and this energy can be transferred to ZnO by Plasmon Induced Resonant Energy Transfer (PIRET). After PIRET, other electrons will be promoted in ZnO conduction band able to reduce further the atmospheric O₂ to O₂¹⁻, thus increasing remarkably the production of singlet oxygen and other reactive oxygen species (or "ROS"). The role of the SiO₂ layer is to create a little insulating barrier which avoids the charge-transfer from the semiconductor (ZnO) towards the metal, thus favouring the plasmonic resonance effect and delaying the electronic recombination.

The very relevant result reached is the possibility to produce singlet oxygen and other ROS through simple irradiation of the ZnO@Ag@SiO₂ complexes in the visible range and not in UV.

### Synthesis method of ZnO structures

As yet said according to the state of the art, the parameters of synthesis have a relevant effect on the characteristics of the nanostructures obtained. Therefore, the present invention provides a particular set-up of the parameters of synthesis, which allows to obtain nanostructures comprising ZnO seeds characterized by a high crystallinity and purity grade. In this case, the present invention is aimed at the definition of a particular thermal treatment to which the ZnO precursor (i.e. Zn(OH)₂) has to be subjected to, defined by the temperature applied and the heating duration, which allows to obtain ZnO with high crystallinity and purity grade, particularly apt for applications in the above cited fields.

Such thermal treatment, and as a consequence the whole synthesis process, besides being more efficient in terms of purity and crystallinity grade than the final material (i.e. nanocrystalline ZnO in wurtzite form), compared to the chemical precipitation methods currently used, is also more economical, by providing the exposition of the material to definitely lower temperatures (i.e. 100 ± 120°C) compared to these last ones (i.e. 500 ± 900°C) .

The process comprises two steps, the first one providing the reduction of a solution of zinc oxide (i.e. zinc sulfate, ZnSO₄), by means a reducer (typically sodium hydroxide, NaOH), thus obtaining a zinc oxide "precursor" (i.e. zinc hydroxide, Zn(OH)₂) followed by the precipitation of the same precursor inside the solution (reaction 1).

In the second step, the precursor is subjected to a thermal treatment, with the double function of converting the precursor (i.e. Zn(OH)₂) in ZnO and of avoiding the formation of intermediate compounds which can nullify the purity, and generally the chemical-physical properties of the material, thus making it not suitable to be used in biological and bio-technological field.

In particular, Zn(OH)₂ is heated at ambient pressure in a controlled way, and this allows to obtain highly pure, crystalline ZnO powders (reaction 2).

ZnSO₄ + 2NaOH -> Na2SO₄ + Zn(OH)₂ (reaction 1)

Zn(OH)₂ + Q -> ZnO + H₂O (reaction 2)

As a way of not limiting example, it was found that it is needed to fix the ZnSO₄ to NaOH molar ratio between 1.5 and 2 to obtain ZnO seeds in the wurtzite crystalline form about 200 nm and with nanoflakes form; that, to obtain the just described result, the treatment temperature is between 100 and 120°C, and preferably about 100°C, and that the treatment duration is preferably equal to at least 6h.

### Synthesis of silver nanoparticles

Concerning the silver nanoparticles (Ag·NPs), they are synthetized with a two steps chemical process, ad hoc developed in order to obtain the adduct.

The first step provides the synthesis and the deposition of a silver precursor (i.e. diamminesilver [Ag(NH₃)₂]+ on the ZnO seed surface. Specifically, the crystalline ZnO synthetized according to what yet described is contacted to silver nitrate (AgNOs) and ammonium hydroxide (NH₄·OH) in strongly alkaline environment (pH > 8.5) and under constant stirring. The reaction time is between 1 and 2 hours, and the reaction occurs at ambient pressure and temperature.

AgNOs and NH₄·OH react by forming [Ag(NH₃)₂]+, which, being positively charge, binds to the zinc oxide surface (typically provided with net negative surface charge).

The deposition of the silver precursor on the ZnO seed surface allows that the precursor reduction, in the next step, occurs directly at contact to the ZnO seeds surface, thus avoiding the Ag·NPs homologous nucleation, i.e. the formation of not adhered Ag·NPs to ZnO seeds.

The second step consists in fact of the *in situ* precursor reduction, obtained by adding a strong reducer agent (e.g. sodium borohydride, NaBH₄) at controlled concentration and speed.

The quantity of reducer to be used and its addition speed represent very important parameters for the careful control of Ag·nPs nucleation on the ZnO seed surface, and, so, of their shape and dimensions. Preferably, 20 mL of (35 mM) NaBH₄ for each 50 mL reaction, in which Ag precursor (2 mM) and ZnO (12 mM) are dissolved, are added at 0.5 mL/min speed. The precursor reduction leads to the obtainment of crystalline ZnO nanostructures, surface-coated with silver nanoparticles.

### Synthesis of ZnO@SiO₂@Ag

The SiO₂ heterologous growth on ZnO seeds surface is carried out by means of a sol-gel process, starting from an organic precursor (e.g. tetraethyl orthosilicate, Si(OC₂H₅)₄) which is hydrolyzed and condensed in alkaline environment (pH > 8.5).

The SiO₂ shell thickness has to be about 10 nm, in order to guarantee the desired electronic effects. The chosen growth process is controlled by the precursor concentration, by the pH and reaction time, which is carried out at ambient temperature and pressure; it is important to find the optimal set-up of such parameters to control the coating thickness.

According to the invention, the reaction is carried out under stirring for 2 hours at ambient temperature and pressure, fixing the reagents molar ratio ZnO - tetraethyl orthosilicate - ammonium hydroxide equal to 1:0, 5:3.

According to the invention, the Ag nanoparticles are deposited only after SiO₂ layer interposition and grown *in situ* on the silica surface by means of the same method, previously described concerning bare ZnO seed.

### Brief description of the drawings

Other characteristics and advantages of the invention will be clearer in light of the detailed description contained in the (preferred but not exclusive) embodiments reported in the next section and shown as a way of not limiting example with reference to the appended drawings.

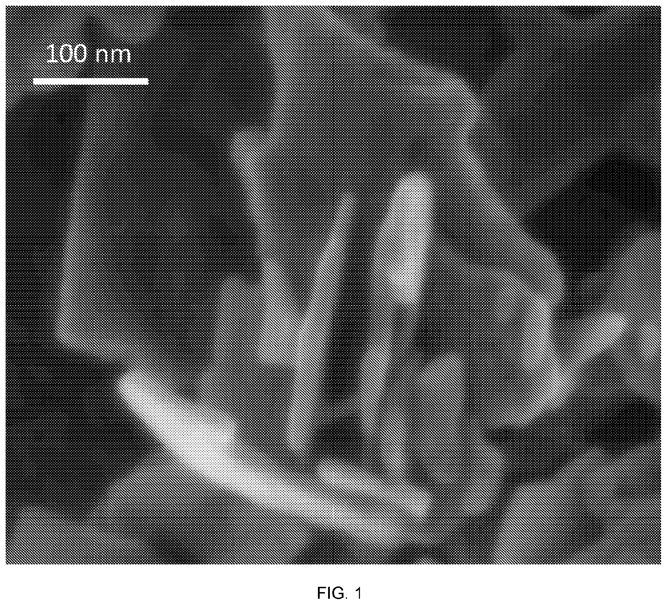

Figure 1 shows an image obtained by means of the Field Emission Scanning Electron Microscopy of ZnO nanoflakes; it is highlighted the characteristic morphology: they are plates of some hundreds nm (100-200) length and about 10 nm height.

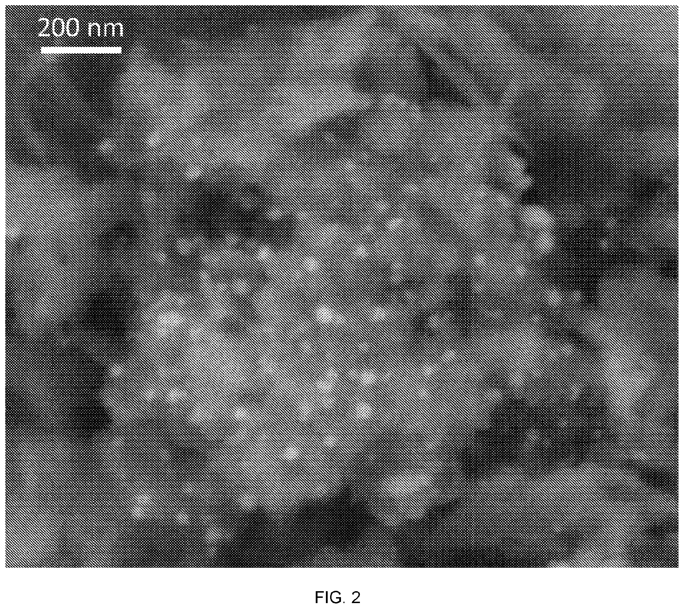

Figure 2 shows an image obtained by means of FE-SEM of ZnO@Ag nanostructures; it is clear the characteristic morphology of spherical AgNPs, with dimensions about 20-25 nm and spaced to each other about 30 and 40 nm.

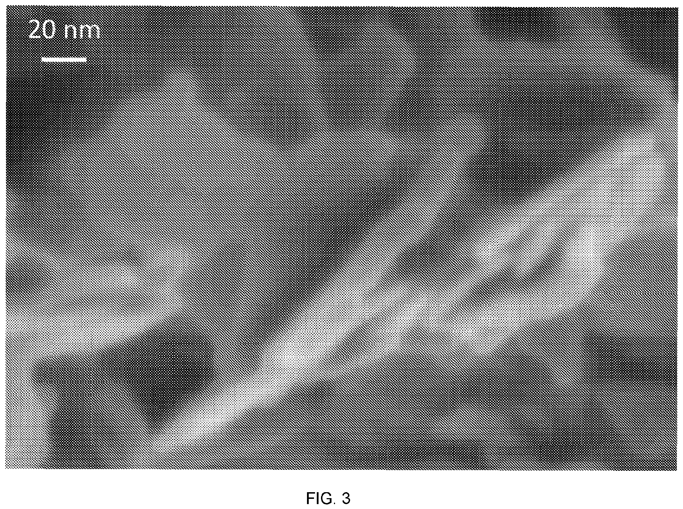

Figure 3 shows an image FE_SEM of ZnO@silica nanoflakes; yet it is highlighted the characteristic morphology, nanoplates of some hundreds nm (100-200) length and about 20 nm height (10 nm ZnO + 10 nm silica shell).

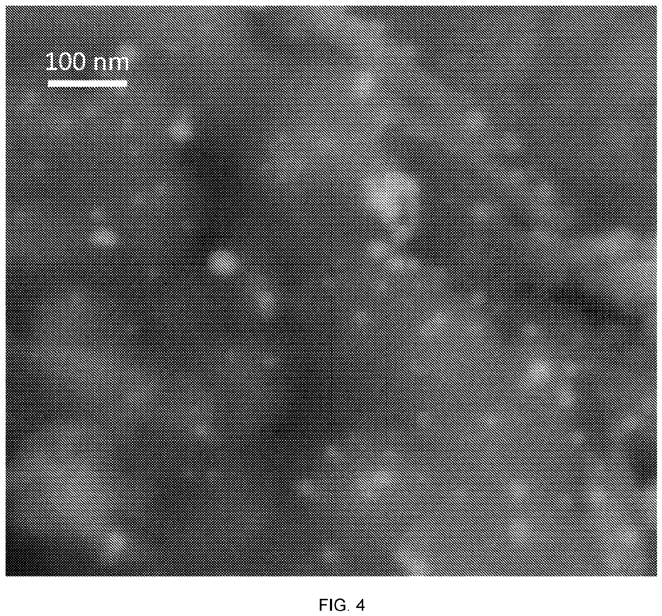

Figure 4 shows an image obtained by means of FE-SEM of ZnO@Silica@Ag nanostructures.

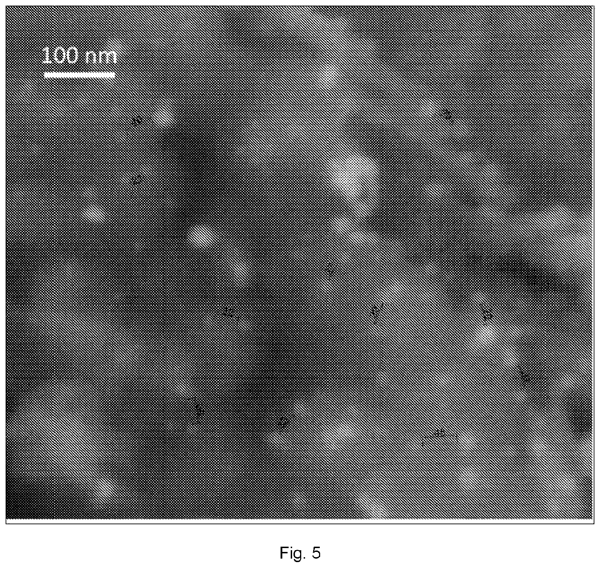

Figure 5 shows the same image as figure 4 with some dimensions superimposed, in nanometers, of the distance between the various Ag nanoparticles.

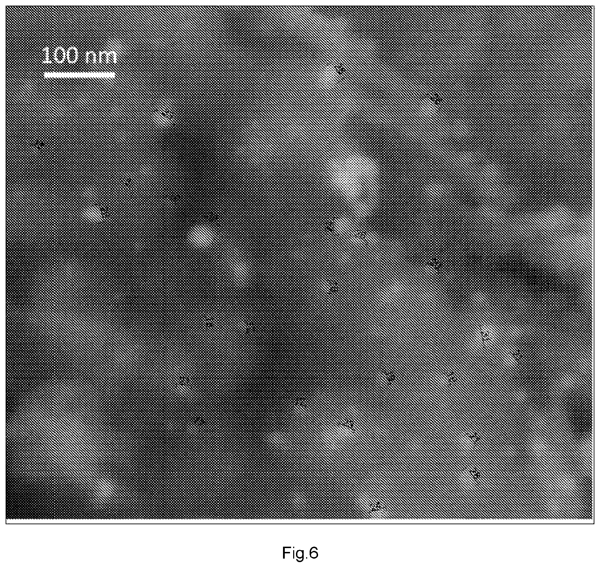

Figure 6 shows the same image a figure 4 with some dimensions superimposed, in nanometers, of the diameter of some nanoparticles.

It is clear the characteristic morphology of spherical AgNPs, with dimensions about 20-25 nm and spaced between 30 and 40 nm. Clearly, not all the nanoparticles have these dimensions and this distance, which have to be intended as average values.

### Embodiments

In the following, there are shown:
- example 1, relative to the synthesis of bare zinc oxide seeds; which are an intermediate product for making nanostructures according to the invention;
- example 2, relative to the deposition of Ag nanoparticles on bare ZnO seeds, with obtainment of ZnO@Ag "adducts"; which are not according to the invention;
- example 3, relative to the provision of a SiO₂ layer on ZnO seeds, with obtainment of ZnO@SiO₂ nanostructures; which are an intermediate product for making nanostructures according to the invention;
- example 4, relative to the deposition of Ag nanoparticles on ZnO@SiO₂ nanostructures, with obtainment of ZnO@SiO₂@Ag "complexes" according to the invention.

### Example 1

A 1 M solution of sodium hydroxide (NaOH) in ultrapure water (solution A1) is additioned to a 50 mM solution of zinc sulfate (ZnSO₄) in water/isopropanol (solution B1). The reaction is carried out under strong stirring for 12 hours at ambient temperature. The white precipitate obtained is washed repeatedly with ultrapure water and separated by centrifugation, and finally oven dried. The parameters and the process steps are the following:
Step 1 - preparation of solution A1: 1.4 g of ZnSO₄ are dissolved in 100 ml of an isopropanol/ultrapure water mixture (50:50 v:v).
Step 2 - preparation of solution B1: 1.99 g NaOH are dissolved in 50 ml of ultrapure water.
Step 3 - addition of solution B1, dropwise, in solution A1 and strong and continuous magnetic stirring, at ambient temperature and pressure, for a sufficiently long time interval (12 h) in order that the reaction between the two precursors is ended. Such reaction leads to the formation of pure zinc hydroxide Zn(OH)₂.
Step 4 - the Zn(OH)₂ formed is taken and washed by centrifugations (n = 5) at 8000 rpm for 15 minutes; Step 5 - finally, the precipitate is treated for 6 hours at 100°C in oven.

### Example 2

A 2 mM solution of silver nitrate (AgNO₃) in water (solution A2) is lead to pH 11 by addition of a solution of NH₄·OH 17% (solution B2). To this solution 25 mg of ZnO are added, synthetized as in example 1, thus obtaining a new solution (solution C2). The reaction is carried out under strong stirring for 12 hours at ambient temperature. At the end of stirring, a 35 mM solution of sodium borohydride (NaBH₄) (solution D2) is additioned to solution C2 at controlled speed, equal to 0.5 ml/min. The reaction is carried out for 3 h at ambient temperature and pressure. The grey precipitate obtained is washed repeatedly with ultrapure water and separated by centrifugation, and finally oven dried. The parameters and the process steps are the following:
Step 1 - preparation of solution A2: 17.5 g of AgNOs are dissolved in 100 ml of ultrapure water.
Step 2 - leading the solution A2 to pH 11 by addition of NH₄·OH 17% (solution B).
Step 3 - preparation of solution D2: 5.3 mg of NaBH₄ are dissolved in ultrapure water.
Step 4 - addition of solution D2, dropwise, at speed equal to 0.5 mil/min, in solution C2 and strong and continuous magnetic stirring, an ambient temperature and pressure, for a sufficiently long time interval (3 h) in order that the reaction between the two precursors is ended. Such reaction leads to the formation of Ag nanoparticles on ZnO surface.
Step 4 - the ZnO@Ag nanostructures formed are taken and washed by centrifugations (n = 5) at 8000 rpm for 15 minutes;
Step 5 - finally, the precipitate is treated for 12 hours at 100°C in oven.

### Example 3

A solution of NH₄·OH 17% in water (solution A3) is additioned to a second solution (solution B) 60 mM ZnO (prepared as in example 1) and 25 mM TEOS in water/ethanol. The reaction is carried out under strong stirring for 2 hours at ambient temperature. The white precipitate obtained is washed repeatedly with ultrapure water and separated by centrifugation, and finally oven dried. The parameters and the process steps are the following:
Step 1 - preparation of solution A3: 0.4 ml of NH₄·OH are withdrawn from a 17% stock.
Step 2 - preparation of solution B3: 0.0486 g of ZnO and 0,050 g of TEOS are dissolved in 9.6 ml of an ultrapure water/ethanol mixture (50:50 v:v).
Step 3 - addition of solution A3, dropwise, in solution B3 and strong and continuous magnetic stirring, at ambient temperature and pressure, for a sufficiently long time interval (2 h) in order that the reaction between the three precursors is ended. Such reaction leads to the formation of SiO₂ on Zn surface.
Step 4 - the ZnO@SiO₂ nanostructures formed are taken and washed by centrifugations (n = 5) at 8000 rpm for 15 minutes;
Step 5 - finally, the precipitate is treated for 12 hours at 200°C in oven.

### Example 4

A 2 mM solution of silver nitrate (AgNOs) in water (solution A4) is lead to pH 11 by addition of a solution of NH₄·OH 17% (solution B4). To this solution 25 mg of ZnO@SiO₂ are added, synthetized as in example 3, thus obtaining a new solution (solution C4). The reaction is carried out under strong stirring for 1 hour at ambient temperature. At the end of stirring, a 35 mM solution of sodium borohydride (NaBH4) (solution D4) is additioned to solution C4 at controlled speed, equal to 0.5 ml/min. The reaction is carried out for 3 h at ambient temperature and pressure. The grey precipitate obtained is washed repeatedly with ultrapure water and separated by centrifugation, and finally oven dried. The parameters and the process steps are the following:
Step 1 - preparation of solution A4: 17.5 g of AgNO3 are dissolved in 100 ml of ultrapure water.
Step 2 - leading the solution A4 to pH 11 by addition of NH₄·OH 17% (solution B4).
Step 3 - preparation of solution D4: 5.3 mg of NaBH₄ are dissolved in ultrapure water.
Step 4 - addition of solution D4, dropwise, at speed equal to 0.5 mil/min, in solution C4 and strong and continuous magnetic stirring, at ambient temperature and pressure, for a sufficiently long time interval (3 h) in order that the reaction between the precursors is ended. Such reaction leads to the formation of Ag nanoparticles on ZnO@SiO₂ surface.
Step 4 - the ZnO@SiO₂@Ag nanostructures formed are taken and washed by centrifugations (n = 5) at 8000 rpm for 15 minutes;
Step 5 - finally, the precipitate is treated for 12 hours at 200°C in oven.

The invention can be modified and varied in many ways, all according to the invention as claimed in the appended claims.

## Claims

1. Synthesis method of nanostructures comprising a zinc oxide seed (ZnO) in the wurtzite hexagonal crystalline form and nanoflake shape with dimensions of 200 nm and 10 nm thickness, surface-coated with silver nanoparticles (Ag) of substantially spherical shape and average dimensions between 15 and 20 nm, said silver nanoparticles being adhered to the surface of said nanostructure, and being spaced to each other, further comprising a nanometric silicon dioxide layer of 10 nm interposed between said zinc oxide seed and said silver nanoparticles coating, the method comprising the steps of:
A. reduction of a solution of a zinc salt by means of a reducer, thus obtaining a zinc oxide precursor and precipitation of said precursor in the solution;
B. thermal treatment of said precursor at ambient pressure and temperature between 100 and 120°C, thus obtaining ZnO seeds;
C. addition of silver nitrate (AgNOs) and ammonium hydroxide (NH₄·OH) to said ZnO nanoparticles, under constant stirring at ambient pressure and temperature, thus obtaining [Ag(NH₃)₂]+ which, being positively charged, binds to the surface of said ZnO seeds;
D. reduction of [Ag(NH₃)₂]+ by means of the addition of a reducer which allows the formation of silver nanoparticles thus obtaining nanostructures comprising crystalline ZnO seeds, surface-coated with silver nanoparticles
**characterized in that** it further comprises, after step B and prior to step C, the step of B'. reaction of said ZnO seeds, obtained in step B, and tetraethyl orthosilicate and ammonium hydroxide so that the molar ratio ZnO - tetraethyl orthosilicate and ammonium hydroxide is equal to 1:0, 5:3, for two hours at ambient temperature and pressure.

2. Synthesis method according to claim 1, **characterized in that** said zinc salt is zinc sulfate (ZnSO₄), said reducer is sodium hydroxide (NaOH), and said precursor is Zn(OH)₂.

3. Synthesis method according to claim 1 or 2, **characterized in that** said reducer for the synthesis of silver nanoparticles is sodium borohydride (NaBH₄).

4. Nanostructure comprising a zinc oxide seed (ZnO) in the wurtzite hexagonal crystalline form, surface-coated with silver nanoparticles (Ag), said silver nanoparticles being adhered to the surface of said nanostructure, and being spaced to each other, further comprising a nanometric silicon dioxide layer interposed between said zinc oxide seed and said silver nanoparticles coating obtained by means of the method according to one of the preceding claims
**characterized in that** said nanometric silicon dioxide layer is 10 nm thick
**in that** said ZnO seed has the nanoflake shape with dimensions 200 nm and 10 nm thickness,
**in that** said Ag nanoparticles have substantially spherical shape and average dimensions between 15 and 20 nm.

## Patentansprüche

1. Syntheseverfahren von Nanostrukturen, die einen Zinkoxidkeim (ZnO) in der hexagonalen Wurtzit-Kristallform und Nanoflockenform mit Abmessungen von 200 nm und 10 nm Dicke umfassen, dessen Oberfläche mit Silbernanopartikeln (Ag) von im Wesentlichen kugelförmiger Form und durchschnittlichen Abmessungen zwischen 15 und 20 nm beschichtet ist, wobei die Silbernanopartikel an der Oberfläche der Nanostruktur haften und voneinander beabstandet sind, und das außerdem eine nanometrische Siliziumdioxidschicht von 10 nm umfasst, die zwischen dem Zinkoxidkeim und der Beschichtung aus Silbernanopartikeln angeordnet ist, wobei das Verfahren die folgenden Schritte umfasst:
A. Reduktion einer Lösung eines Zinksalzes mittels eines Reduktionsmittels, wodurch ein Zinkoxidvorläufer erhalten wird, und Ausfällung des Vorläufers in der Lösung;
B. Wärmebehandlung des Vorläufers bei Umgebungsdruck und einer Temperatur zwischen 100 und 120°C, wodurch ZnO-Keime erhalten werden;
C. Zugabe von Silbernitrat (AgNO₃) und Ammoniumhydroxid (NH₄.OH) zu den ZnO-Nanopartikeln unter ständigem Rühren bei Umgebungsdruck und -temperatur, wodurch [Ag(NH₃)₂]+ erhalten wird, das positiv geladen ist und sich an die Oberfläche der ZnO-Keime bindet;
D. Reduktion von [Ag(NH₃)₂]+ durch Zugabe eines Reduktionsmittels, das die Bildung von Silbernanopartikeln ermöglicht, wodurch Nanostrukturen erhalten werden, die kristalline ZnO-Keime umfassen, deren Oberfläche mit Silbernanopartikeln beschichtet ist,
**dadurch gekennzeichnet, dass** es nach Schritt B und vor Schritt C außerdem den Schritt umfasst
B'. Reaktion der in Schritt B erhaltenen ZnO-Keime und Tetraethylorthosilikat und Ammoniumhydroxid, sodass das Molverhältnis ZnO - Tetraethylorthosilikat und Ammoniumhydroxid 1:0, 5:3 beträgt, für zwei Stunden bei Umgebungstemperatur und -druck.

2. Syntheseverfahren nach Anspruch 1, **dadurch gekennzeichnet, dass** das Zinksalz Zinksulfat (ZnSO₄), das Reduktionsmittel Natriumhydroxid (NaOH) und der Vorläufer Zn(OH)₂ ist.

3. Syntheseverfahren nach Anspruch 1 oder 2, **dadurch gekennzeichnet, dass** das Reduktionsmittel für die Synthese von Silbernanopartikeln Natriumborhydrid (NaBH₄) ist.

4. Nanostruktur, die einen Zinkoxidkeim (ZnO) in der hexagonalen Wurtzit-Kristallform umfasst, dessen Oberfläche mit Silbernanopartikeln (Ag) beschichtet ist, wobei die Silbernanopartikel an der Oberfläche der Nanostruktur haften und voneinander beabstandet sind, und die außerdem eine nanometrische Siliziumdioxidschicht umfasst, die zwischen dem Zinkoxidkeim und der Beschichtung aus Silbernanopartikeln angeordnet ist und die mit dem Verfahren gemäß einem der vorhergehenden Ansprüche erhalten wurde,
**dadurch gekennzeichnet,**
**dass** die nanometrische Siliziumdioxidschicht 10 nm dick ist, dass der ZnO-Keim die Form einer Nanoflocke mit den Abmessungen 200 nm und einer Dicke von 10 nm hat,
**dass** die Ag-Nanopartikel im Wesentlichen eine sphärische Form und durchschnittliche Abmessungen zwischen 15 und 20 nm haben.

## Revendications

1. Procédé de synthèse de nanostructures comprenant un germe d'oxyde de zinc (ZnO) sous forme cristalline hexagonale de wurtzite et en forme de nanoflakes de dimensions 200 nm et 10 nm d'épaisseur, recouvert en surface de nanoparticules d'argent (Ag) de forme sensiblement sphérique et de dimensions moyennes comprises entre 15 et 20 nm, lesdites nanoparticules d'argent adhérant à la surface de ladite nanostructure et étant espacées les unes des autres, comprenant en outre une couche nanométrique de dioxyde de silicium de 10 nm interposée entre ledit germe d'oxyde de zinc et ledit revêtement de nanoparticules d'argent, le procédé comprenant LES étapes de:
A. réduction d'une solution d'un sel de zinc au moyen d'un réducteur, obtenant ainsi un précurseur d'oxyde de zinc, et précipitation dudit précurseur dans la solution ;
B. traitement thermique dudit précurseur à pression ambiante et température comprise entre 100 et 120°C, obtenant ainsi des germes de ZnO;
C. ajout de nitrate d'argent (AgNO₃) et d'hydroxyde d'ammonium (NH₄.OH) auxdites nanoparticules de ZnO, sous agitation constante à pression et température ambiantes, obtenant ainsi [Ag(NH₃)₂]+ qui, étant chargé positivement, se lie à la surface desdits germes de ZnO;
D. réduction de [Ag(NH₃)₂]+ au moyen de l'ajout d'un réducteur qui permet la formation de nanoparticules d'argent obtenant ainsi des nanostructures comprenant des germes cristallins de ZnO, recouverts en surface de nanoparticules d'argent
**caractérisé en ce qu'**il comprend en outre, après l'étape B et avant l'étape C, l'étape de
B'. réaction desdits germes de ZnO, obtenus à l'étape B, et de l'orthosilicate de tétraéthyle et de l'hydroxyde d'ammonium de telle sorte que le rapport molaire ZnO - orthosilicate de tétraéthyle et hydroxyde d'ammonium soit égal à 1:0, 5:3, pendant deux heures à température et pression ambiantes.

2. Procédé de synthèse selon la revendication 1, **caractérisé en ce que** ledit sel de zinc est le sulfate de zinc (ZnSO₄), ledit réducteur est l'hydroxyde de sodium (NaOH), et ledit précurseur est Zn(OH)₂.

3. Procédé de synthèse selon la revendication 1 ou 2, **caractérisé en ce que** ledit réducteur pour la synthèse de nanoparticules d'argent est le borohydrure de sodium (NaBH₄) .

4. Nanostructure comprenant un germe d'oxyde de zinc (ZnO) sous forme cristalline hexagonale de wurtzite, recouvert en surface de nanoparticules d'argent (Ag), lesdites nanoparticules d'argent adhérant à la surface de ladite nanostructure, et étant espacées les unes des autres, comprenant en outre une couche nanométrique de dioxyde de silicium interposée entre ledit germe d'oxyde de zinc et ledit revêtement de nanoparticules d'argent obtenu au moyen du procédé selon l'une des revendications précédentes,
**caractérisé en ce que** ladite couche nanométrique de dioxyde de silicium a une épaisseur de 10 nm,
**en ce que** ledit germe de ZnO a la forme de nanoflakes de dimensions 200 nm et 10 nm d'épaisseur,
**en ce que** lesdites nanoparticules d'Ag ont une forme sensiblement sphérique et des dimensions moyennes comprises entre 15 et 20 nm.
